# EUROPÄISCHE PATENTSCHRIFT

(11) **EP 1 058 977 B1**
(45) Veröffentlichungstag und Bekanntmachung des Hinweises auf die Patenterteilung: **22.10.2003**
(21) Anmeldenummer: 99936148.8
(22) Anmeldetag: 01.03.1999
(51) Int. Cl.: H04B 7/26

(54) **TELEKOMMUNIKATIONSSYSTEME MIT DRAHTLOSER, AUF CODE- UND ZEITMULTIPLEX BASIERENDER TELEKOMMUNIKATION**
TELECOMMUNICATIONS SYSTEM WITH WIRELESS CODE AND TIME-DIVISION MULTIPLEX BASED TELECOMMUNICATION
SYSTEMES DE TELECOMMUNICATION A TELECOMMUNICATION SANS FIL FONDEE SUR LE CODE ET LE MULTIPLEXAGE DANS LE TEMPS

(30) Priorität: 27.02.1998 EP 98103508
(43) Veröffentlichungstag der Anmeldung: 13.12.2000
(73) Patentinhaber: SIEMENS AKTIENGESELLSCHAFT, 80333 München (DE)
(72) Erfinder: KAMPERSCHROER, Erich, D-46499 Hamminkeln (DE); SCHWARK, Uwe, D-46399 Bocholt (DE)
(86) Internationale Anmeldenummer: EP9901318
(87) Internationale Veröffentlichungsnummer: WO99044313

(56) Entgegenhaltungen:
- DE-A- 19 549 148
- KLEIN A ET AL: "FRAMES multiple access mode 1-wideband TDMA with and without spreading" WAVES OF THE YEAR 2000+ PIMRC. THE IEEE INTERNATIONAL SYMPOSIUM ON PERSONAL, INDOOR AND MOBILE RADIO COMMUNICATIONS. TECHNICAL PROGRAM, Bd. 1, 1. Januar 1997, Seiten 37-41, XP002094062
- OJANPER ET AL: "FRAMES-hybrid multiple access technology" IEEE ISSSTA. IEEE INTERNATIONAL SYMPOSIUM ON SPREAD SPECTRUM TECHNIQUES AND APPLICATIONS, Nr. 1, 22. September 1996, Seite 320 324 XP002077020

## Beschreibung

Telekommunikationssysteme mit drahtloser Telekommunikation zwischen mobilen und/oder stationären Sende-/Empfangsgeräten sind spezielle Nachrichtensysteme mit einer Nachrichtenübertragungsstrecke zwischen einer Nachrichtenquelle und einer Nachrichtensenke, bei denen beispielsweise Basisstationen und Mobilteile zur Nachrichtenverarbeitung und -übertragung als Sende- und Empfangsgeräte verwendet werden und bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung vorzugsweise digital ist,
3) die Nachrichtenübertragung über die Fernübertragungsstrecke drahtlos auf der Basis von diversen Nachrichtenübertragungsverfahren zur Mehrfachausnutzung der Nachrichtenübertragungsstrecke FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie **DECT** [**D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und der DECT-Publikation des *DECT-Forum, Februar 1997, Seiten 1 bis 16*], **GSM** [**G**roupe **S**péciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale europäische Mobilfunknetze", Seiten 137 bis 152* **in Verbindung mit** der Publikation *telekom praxis 4*/*1993, P.Smolka "GSM-Funkschnittstelle - Elemente und Funktionen",* *Seiten 17 bis 24],*
   **UMTS** [**U**niversal **M**obile **T**elecommunication **S**ystem; vgl. (**1**): *Nachrichtentechnik Elektronik, Berlin 45, 1995, Heft 1, Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration"*; **(2) :** *Nachrichtentechnik Elektronik, Berlin 41, 1991, Heft 6, Seiten 223 bis 227 und Seite 234; P.W.Baier, P.Jung, A.Klein: "CDMA - ein günstiges Vielfachzugriffsverfahren für frequenzselektive und zeitvariante Mobilfunkkanäle";* **(3):** *IEICE Transactions on Fundamentals of Electonics, Communications and Computer Sciences, Vol. E79-A, No. 12, December 1996, Seiten 1930 bis 1937; P.W.Baier, P. Jung:* "*CDMA Myths and Realities Revi-sited"*; **(4):** *IEEE Personal Communications, February 1995,* Seiten *38 bis 47; A. Urie, M.Streeton, C.Mourot: "An Advanced TDMA Mobile Access System for UMTS";* **(5):** *telekom praxis, 5*/*1995, Seiten 9 bis 14; P.W.Baier:* "*Spread-Spectrum-Technik und CDMA - eine ursprünglich militärische Technik erobert den zivilen Bereich";* **(6):** *IEEE Personal Communications, February 1995, Seiten 48 bis 53; P.G.Andermo, L.M.Ewerbring: "An CDMA-Based Radio Access Design for UMTS";* **(7):** *ITG Fachberichte 124 (1993), Berlin, Offenbach: VDE Verlag ISBN 3-8007-1965-7, Seiten 67 bis 75; Dr. T.Zimmermann, Siemens AG: "Anwendung von CDMA in der Mobilkommunikation";* **(8):** *telcom report 16, (1993), Heft 1, Seiten 38 bis 41; Dr. T. Ketseoglou, Siemens AG und Dr. T. Zimmermann, Siemens AG: "Effizienter Teilnehmerzugriff für die 3. Generation der Mobilkommunikation - Vielfachzugriffsverfahren CDMA macht Luftschnittstelle flexibler";* **(9):** *Funkschau 6*/*98: R.Sietmann "Ringen um die UMTS-Schnittstelle", Seiten 76 bis 81*] WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"]
   erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Die nachfolgenden FIGUREN 1 bis 7 zeigen:
FIGUR 1 "Drei-Ebenen-Struktur" einer WCDMA/FDD-Luftschnittstelle im "Downlink",
FIGUR 2 "Drei-Ebenen-Struktur" einer WCDMA/FDD-Luftschnittsteile im "Uplink",
FIGUR 3 "Drei-Ebenen-Struktur" einer TDCDMA/TDD-Luftschnittstelle,
FIGUR 4 Funkszenario mit Kanal-Mehrfachausnutzung nach dem Frequenz-,/Zeit-,/Codemultiplex,
FIGUR 5 den prinzipiellen Aufbau einer als Sende-/Empfangsgerät ausgebildeten Basisstation,
FIGUR 6 den prinzipiellen Aufbau einer ebenfalls als Sende-/Empfangsgerät ausgebildeten Mobilstation,
FIGUR 7 einen DECT-Übertragungszeitrahmen.

Im UMTS-Szenario (3. Mobilfunkgeneration bzw. IMT-2000) gibt es z.B. gemäß der Druckschrift *Funkschau 6*/*98: R.Sietmann "Ringen um die UMTS-Schnittstelle", Selten 76 bis 81* zwei Teilszenarien. In einem ersten Teilszenario wird der lizensierte koordinierte Mobilfunk auf einer WCDMA-Technologie (**W**ideband **C**ode **D**ivision **M**ultiple **A**ccess) basieren und, wie bei GSM, im FDD-Modus (**F**requency **D**ivision **D**uplex) betrieben, während in einem zweiten Teilszenario der unlizensierte unkoordinierte Mobilfunk auf einer TD-CDMA-Technologie (**T**ime **D**ivision-**C**ode **D**ivision **M**ultiple **A**ccess) basieren und, wie bei DECT, im TDD-Modus (**F**requency **D**ivision **D**uplex) betrieben wird.

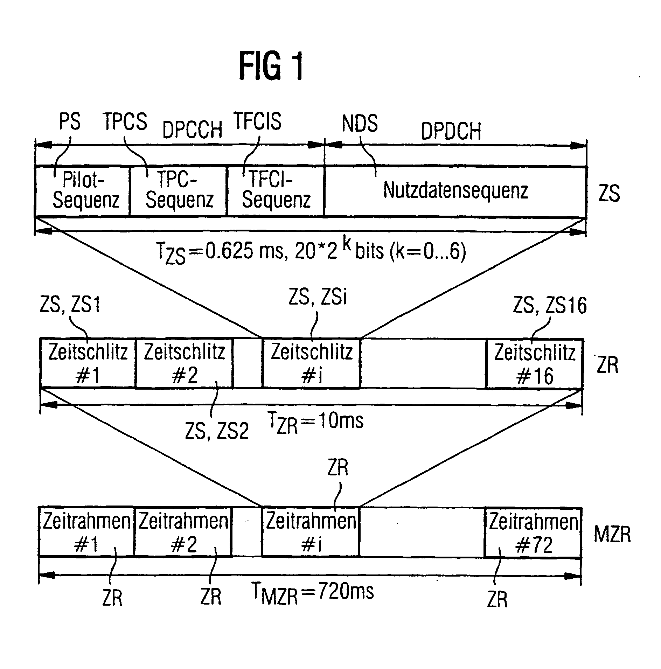

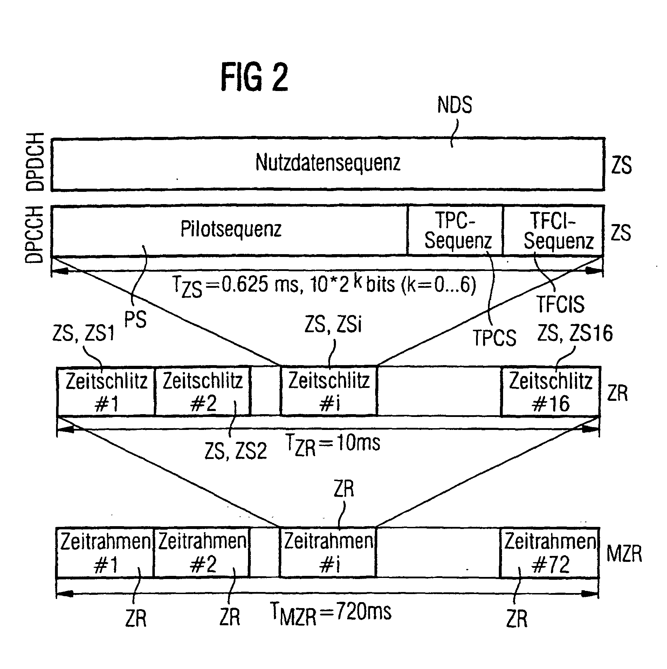

Für den WCDMA/FDD-Betrieb des Universal-Mobil-Telekommunikation-Systems enthält die Luftschnittstelle des Telekommunikationsystems in Auf- und Abwärtsrichtung der Telekommunikation gemäß der Druckschrift *ETSI STC SMG2 UMTS-L1, Tdoc SMG2 UMTS-L1 163*/*98: "UTRA Physical Layer Description FDD Parts" Vers. 0.3, 1998-05-29* jeweils mehrere physikalische Kanäle, von denen ein erster physikalischer Kanal, der sogenannte Dedicated **P**hysical **C**ontrol **CH**annel DPCCH, und ein zweiter physikalischer Kanal, der sogenannte **D**edicated **P**hysical **D**ata **CH**annel DPDCH, in bezug auf eine "Drei-Ebenen-Struktur" (three-layerstructure), bestehend aus 720 ms lange (T_{MZR}=720 ms) Multizeitrahmen (super frame) MZR, 10 ms lange (T_{FZR}=10 ms) Zeitrahmen (radio frame) ZR und 0,625 ms lange (T_{ZS}=0,625 ms) Zeitschlitzen (timeslot) ZS , die in den FIGUREN 1 und 2 dargestellt sind. Der jeweilige Multizeitrahmen MZR enthält z.B. 72 Zeitrahmen ZR, während jeder Zeitrahmen ZR z.B. wiederum 16 Zeitschlitze ZS1...ZS16 aufweist. Der einzelne Zeitschlitz ZS, ZS1...ZS16 (Burst) weist bezüglich des ersten physikalischen Kanals DPCCH als Burststruktur eine Pilot-Sequenz PS mit Nₚᵢₗₒₜ Bits zur Kanalschätzung, eine TPC-Sequenz TPCS mit N_{TPC}-Bits zur Leistungsregelung (Traffic Power Control) und eine TFCI-Sequenz TFCIS mit N_{TFCI}-Bits zur Transportformatangabe (Traffic Format Channel Indication) sowie bezuglich des zweiten physikalischen Kanals DPDCH eine Nutzdatensequenz NDS mit N_{Data}-Bits auf.

Im "Downlink" (Abwärtsrichtung der Telekommunikation; Funkverbindung von der Basisstation zur Mobilstation) des WCDMA/FDD Systems von ETSI bzw. ARIB - FIGUR 1 - werden der erste physikalische Kanal ["Dedicated Physical Control Channel (DPCCH)] und der zweite physikalische Kanal ["Dedicated Physical Data Channel (DPDCH)] zeitlich gemultiplext, während im "Uplink" (Aufwärtsrichtung der Telekommunikation; Funkverbindung von der Mobilstation zur Basisstation) - FIGUR 2 - ein I/Q-Multiplex stattfindet, bei dem der zweite physikalische Kanal DPDCH im I-Kanal und der erste physikalische Kanal DPCCH im Q-Kanal übertragen werden.

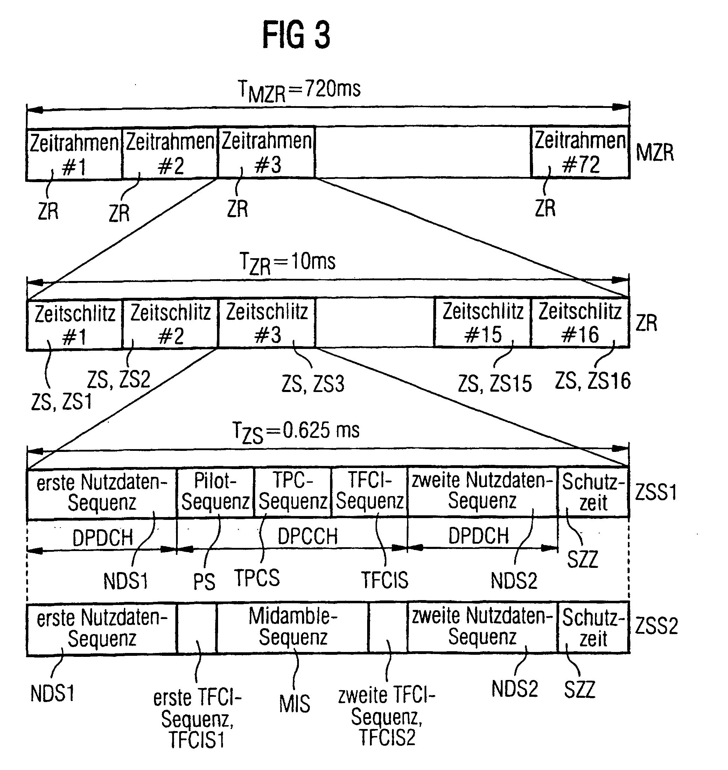

Für den TDCDMA/TDD-Betrieb des Universal-Mobil-Telekommunikation-Systems basiert die Luftschnittstelle des Telekommunikationsystems in Auf- und Abwärtsrichtung der Telekommunikation gemäß der Druckschrift *TSG RAN WG1 (S1.21): "3*^{*rd*} *Generation Partnership Project (3GPP)" Vers. 0.0.1, 1999-01* wiederum auf die "Drei-Ebenen-Struktur", bestehend aus den Multizeitrahmen MZR, den Zeitrahmen ZR und den Zeitschlitzen ZS, für sämtliche physikalischen Kanäle, die in FIGUR 3 dargestellt ist. Der jeweilige Multizeitrahmen MZR enthält wiederum z.B. 72 Zeitrahmen ZR, während jeder Zeitrahmen ZR z.B. wiederum die 16 Zeitschutze ZS1...ZS16 aufweist. Der einzelne Zeitschlitz ZS, ZS1...ZS16 (Burst) weist entweder gemäß dem ARIB-Vorschlag eine erste Zeitschlitzstruktur (Burststruktur) ZSS1, in der Reihenfolge bestehend aus einer ersten Nutzdatensequenz NDS1 mit N_{Data1}-Bits, der Pilot-Sequenz PS mit Nₚᵢₗₒₜ Bits zur Kanalschätzung, der TPC-Sequenz TPCS mit N_{TPC}-Bits zur Leistungsregelung, der TFCI-Sequenz TFCIS mit N_{TFCI}-Bits zur Transportformatangabe, einer zweiten Nutzdatensequenz NDS2 und einer Schutzzeitzone SZZ (guard period) mit N_{Guard}-Bits, oder gemäß dem ETSI-Vorschlag eine zweite Zeitschlitzstruktur (Burststruktur) ZSS2, in der Reihenfolge bestehend aus der ersten Nutzdatensequenz NDS1, einer ersten TFCI-Sequenz TFCIS1, einer Midamble-Sequenz MIS zur Kanalschätzung, einer zweiten TFCI-Sequenz TFCIS2, der zweiten Nutzdatensequenz NDS2 und der Schutzzeitzone SZZ auf.

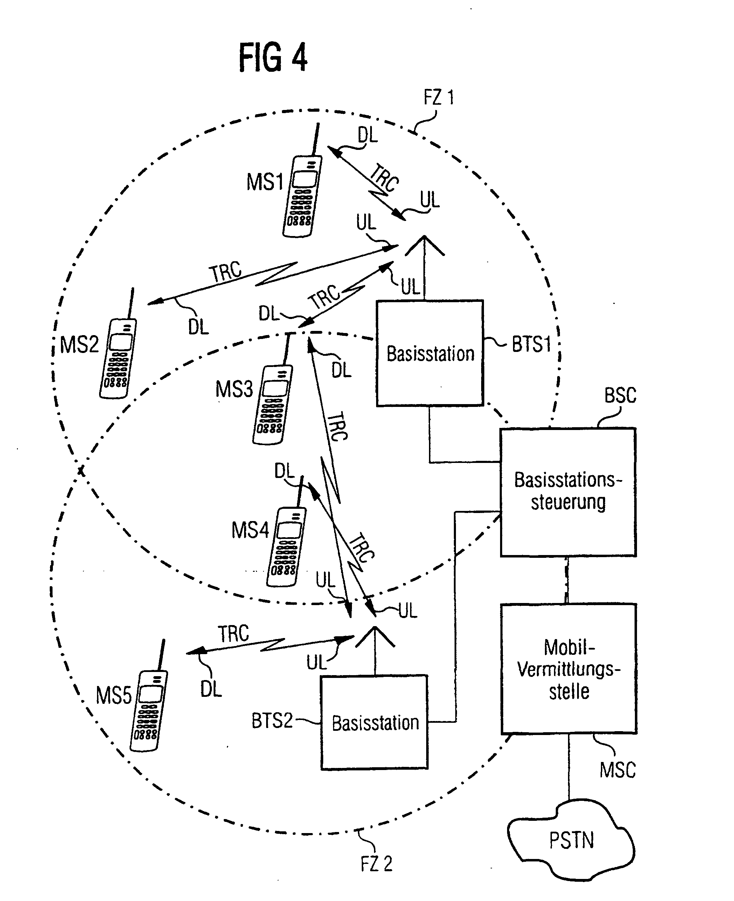

FIGUR 4 zeigt z.B. auf der Basis eines GSM-Funkszenarios mit z.B. zwei Funkzellen und darin angeordneten Basisstationen (**B**ase **T**ransceiver **S**tation), wobei eine erste Basisstation BTS1 (Sender/Empfänger) eine erste Funkzelle FZ1 und eine zweite Basisstation BTS2 (Sende-/Empfangsgerät) eine zweite Funkzelle FZ2 omnidirektional "ausleuchtet", und ausgehend von den FIGUREN 1 und 2 ein Funkszenario mit Kanal-Mehrfachausnutzung nach dem Frequenz-/Zeit-/Codemultiplex, bei dem die Basisstationen BTS1, BTS2 über eine für das Funkszenario ausgelegte Luftschnittstelle mit mehreren in den Funkzellen FZ1, FZ2 befindlichen Mobilstationen MS1...MS5 (Sende-/Empfangsgerät) durch drahtlose uni- oder bidirektionale - Aufwärtsrichtung UL (Up Link) und/oder Abwärtsrichtung DL (Down Link) - Telekommunikation auf entsprechende Übertragungkanäle TRC (Transmission Channel) verbunden bzw. verbindbar sind. Die Basisstationen BTS1, BTS2 sind in bekannter Weise (vgl. GSM-Telekommunikationssystem) mit einer Basisstationssteuerung BSC (**B**ase**S**tation **C**ontroller) verbunden, die im Rahmen der Steuerung der Basisstationen die Frequenzverwaltung und Vermittlungsfunktionen übernimmt. Die Basisstationssteuerung BSC ist ihrerseits über eine Mobil-Vermittlungsstelle MSC (**M**obile **S**witching **C**enter) mit dem übergeordneten Telekommunikationsnetz, z.B. dem PSTN (Public Switched Telecommunication Network), verbunden. Die Mobil-Vermittlungsstelle MSC ist die Verwaltungszentrale für das dargestellte Telekommunikationssystem. Sie übernimmt die komplette Anrufverwaltung und mit angegliederten Registern (nicht dargestellt) die Authentisierung der Telekommunikationsteilnehmer sowie die Ortsüberwachung im Netzwerk.

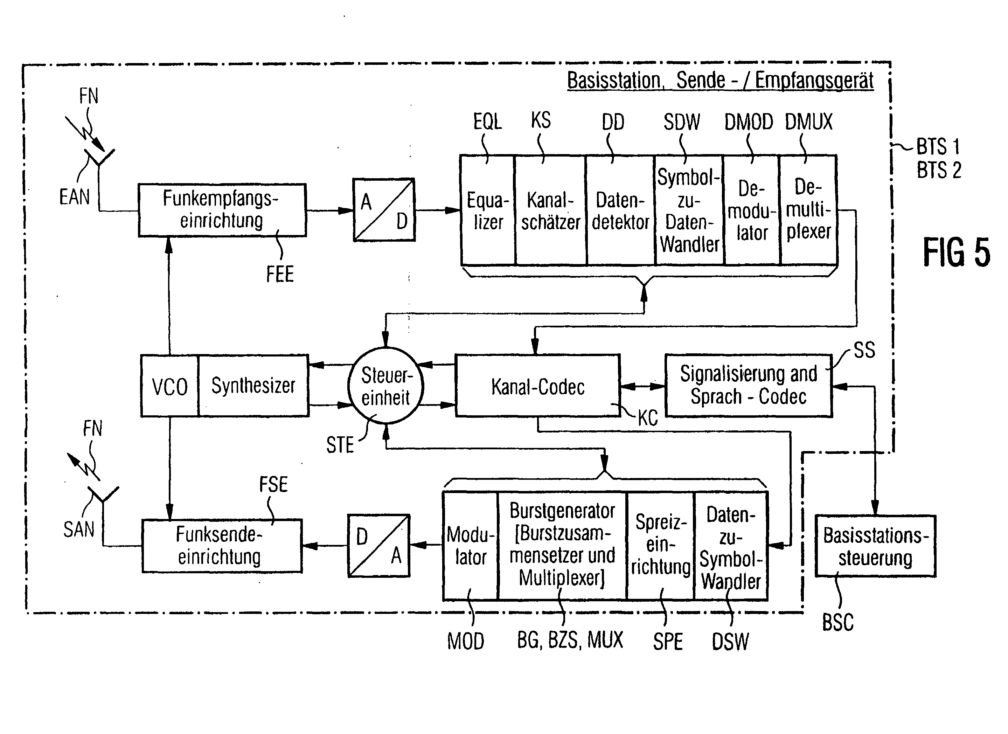

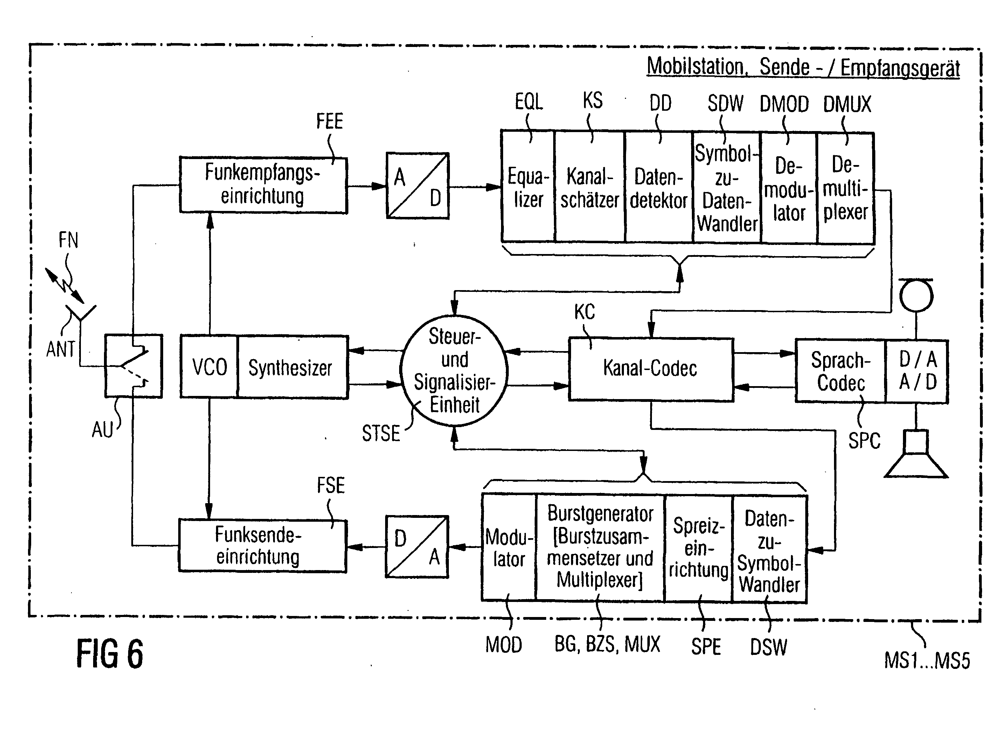

FIGUR 5 zeigt den prinzipiellen Aufbau der als Sende-/Empfangsgerät ausgebildeten Basisstation BTS1, BTS2, während FIGUR 6 den prinzipiellen Aufbau der ebenfalls als Sende-/Empfangsgerät ausgebildeten Mobilstation MS1...MS5 zeigt. Die Basisstation BTS1, BTS2 übernimmt das Senden und Empfangen von Funknachrichten von und zur Mobilstation MS1..MS5, während die Mobilstation MS1...MS5 das Senden und Empfangen von Funknachrichten von und zur Basisstation BTS1, BTS2 übernimmt. Hierzu weist die Basisstation eine Sendeantenne SAN und eine Empfangsantenne EAN auf, während die Mobilstation MS1...MS5 eine durch eine Antennenumschaltung AU steuerbare für das Senden und Empfangen gemeinsame Antenne ANT aufweist. In der Aufwärtsrichtung (Empfangspfad) empfängt die Basisstation BTS1, BTS2 über die Empfangsantenne EAN beispielsweise mindestens eine Funknachricht FN mit einer Frequenz-/Zeit-/Code-Komponente von mindestens einer der Mobilstationen MS1...MS5, während die Mobilstation MS1...MS5 in der Abwärtsrichtung (Empfangspfad) über die gemeinsame Antenne ANT beispielsweise mindestens eine Funknachricht FN mit einer Frequenz-/Zeit-/Code-Komponente von mindestens einer Basisstation BTS1, BTS2 empfängt. Die Funknachricht FN besteht dabei aus einem breitbandig gespreizten Trägersignal mit einer aufmodulierten aus Datensymbolen zusammengesetzten Information.

In einer Funkempfangseinrichtung FEE (Empfänger) wird das empfangene Trägersignal gefiltert und auf eine Zwischenfrequenz heruntergemischt, die ihrerseits im weiteren abgetastet und quantisiert wird. Nach einer Analog/Digital-Wandlung wird das Signal, das auf dem Funkweg durch Mehrwegeausbreitung verzerrt worden ist, einem Equalizer EQL zugeführt, der die Verzerrungen zu einem großen Teil ausgleicht (Stichwort: Synchronisation).

Anschließend wird in einem Kanalschätzer KS versucht die Übertragungseigenschaften des Übertragungskanals TRC auf dem die Funknachricht FN übertragen worden ist, zu schätzen. Die Übertragungseigenschaften des Kanals sind dabei im Zeitbereich durch die Kanalimpulsantwort angegeben. Damit die Kanalimpulsantwort geschätzt werden kann, wird der Funknachricht FN sendeseitig (im vorliegenden Fall von der Mobilstation MS1...MS5 bzw. der Basisstation BTS1, BTS2) eine spezielle, als Trainingsinformationssequenz ausgebildete Zusatzinformation in Form einer sogenannten Midambel zugewiesen bzw. zugeordnet.

In einem daran anschließenden für alle empfangenen Signale gemeinsamen Datendetektor DD werden die in dem gemeinsamen Signal enthaltenen einzelnen mobilstationsspezifischen Signalanteile in bekannter Weise entzerrt und separiert. Nach der Entzerrung und Separierung werden in einem Symbol-zu-Daten-Wandler SDW die bisher vorliegenden Datensymbole in binäre Daten umgewandelt. Danach wird in einem Demodulator DMOD aus der Zwischenfrequenz der ursprüngliche Bitstrom gewonnen, bevor in einem Demultiplexer DMUX die einzelnen Zeitschlitze den richtigen logischen Kanälen und damit auch den unterschiedlichen Mobilstationen zugeordnet werden.

In einem Kanal-Codec KC wird die erhaltene Bitsequenz kanalweise decodiert. Je nach Kanal werden die Bitinformationen dem Kontroll- und Signalisierungszeitschlitz oder einem Sprachzeitschlitz zugewiesen und - im Fall der Basisstation (FIGUR 5) - die Kontroll- und Signalisierungsdaten und die Sprachdaten zur Übertragung an die Basisstationssteuerung BSC gemeinsam einer für die Signalisierung und Sprachcodierung/decodierung (Sprach-Codec) zuständigen Schnittstelle SS übergeben, während - im Fall der Mobilstation (FIGUR 6) - die Kontroll- und Signalisierungsdaten einer für die komplette Signalisierung und Steuerung der Mobilstation zuständigen Steuer- und Signalisiereinheit STSE und die Sprachdaten einem für die Spracheingabe und -ausgabe ausgelegten Sprach-Codec SPC übergeben werden.

In dem Sprach-Codec der Schnittstelle SS in der Basisstation BTS1, BTS2 werden die Sprachdaten in einem vorgegebenen Datenstrom (z.B. 64kbit/s-Strom in Netzrichtung bzw. 13kbit/s-Strom aus Netzrichtung).

In einer Steuereinheit STE wird die komplette Steuerung der Basisstation BTS1, BTS2 durchgeführt.

In der Abwärtsrichtung (Sendepfad) sendet die Basisstation BTS1, BTS2 über die Sendeantenne SAN beispielsweise mindestens eine Funknachricht FN mit einer Frequenz-/Zeit-/Code-Komponente an mindestens eine der Mobilstationen MS1...MS5, während die Mobilstation MS1...MS5 in der Aufwärtsrichtung (Sendepfad) über die gemeinsame Antenne ANT beispielsweise mindestens eine Funknachricht FN mit einer Frequenz-/Zeit-/Code-Komponente an mindestens einer Basisstation BTS1, BTS2 sendet.

Der Sendepfad beginnt bei der Basisstation BTS1, BTS2 in FIGUR 5 damit, daß in dem Kanal-Codec KC von der Basisstationssteuerung BSC über die Schnittstelle SS erhaltene Kontroll- und Signalisierungsdaten sowie Sprachdaten einem Kontroll- und Signalisierungszeitschlitz oder einem Sprachzeitschlitz zugewiesen werden und diese kanalweise in eine Bitsequenz codiert werden.

Der Sendepfad beginnt bei der Mobilstation MS1...MS5 in FIGUR 6 damit, daß in dem Kanal-Codec KC von dem Sprach-Codec SPC erhaltene Sprachdaten und von der Steuer- und Signalsiereinheit STSE erhaltene Kontroll- und Signalisierungsdaten einem Kontroll- und Signalisierungszeitschlitz oder einem Sprachzeitschlitz zugewiesen werden und diese kanalweise in eine Bitsequenz codiert werden.

Die in der Basisstation BTS1, BTS2 und in der Mobilstation MS1...MS5 gewonnene Bitsequenz wird jeweils in einem Datenzu-Symbol-Wandler DSW in Datensymbole umgewandelt. Im Anschluß daran werden jeweils die Datensymbole in einer Spreizeinrichtung SPE mit einem jeweils teilnehmerindividuellen Code gespreizt. In dem Burstgenerator BG, bestehend aus einem Burstzusammensetzer BZS und einem Multiplexer MUX, wird danach in dem Burstzusammensetzer BZS jeweils den gespreizten Datensymbolen eine Trainingsinformationssequenz in Form einer Mitambel zur Kanalschätzung hinzugefügt und im Multiplexer MUX die auf diese Weise erhaltene Burstinformation auf den jeweils richtigen Zeitschlitz gesetzt. Abschließend wird der erhaltene Burst jeweils in einem Modulator MOD hochfrequent moduliert sowie digital/analog umgewandelt, bevor das auf diese Weise erhaltene Signal als Funknachricht FN über eine Funksendeeinrichtung FSE (Sender) an der Sendeantenne SAN bzw. der gemeinsamen Antenne ANT abgestrahlt wird.

TDD-Telekommunikationsysteme (**T**ime **D**ivision **D**uplex) sind Telekommunikationssysteme, bei denen der Übertragungszeitrahmen, bestehend aus mehreren Zeitschlitzen, für die Abwärtsübertragungsrichtung (Downlink) und die Aufwärtsübertragungsrichtung (Uplink) - vorzugsweise in der Mitte - geteilt ist.

Ein TDD-Telekommunikationssystem, das einen derartigen Übertragungszeitrahmen aufweist, ist z.B. das bekannte DECT-System [**D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und der DECT-Publikation des *DECT-Forum, Februar 1997, Seiten 1 bis 16].*

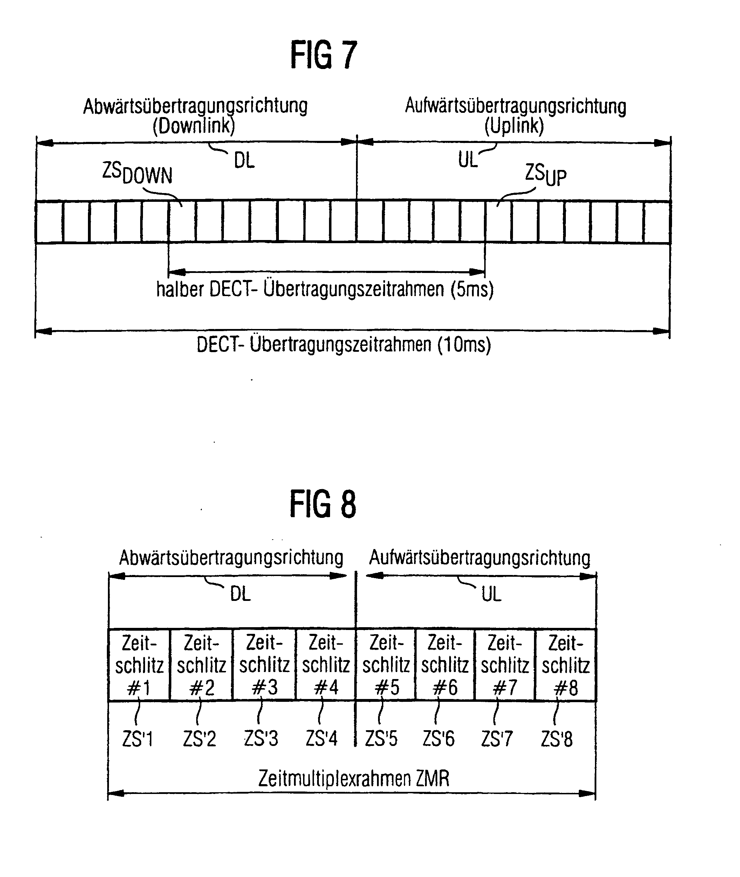

FIGUR 7 zeigt einen DECT-Übertragungszeitrahmen mit einer Zeitdauer von 10 ms, bestehend aus 12 "Downlink"--Zeitschlitzen und 12 "Uplink"-Zeitschlitzen. Für eine beliebige bidirektionale Telekommunikationsverbindung auf einer vorgegebenen Frequenz in Abwärtsübertragungsrichtung DL (Down Link) und Aufwärtsübertragungsrichtung UL (Up Link) wird gemäß dem DECT-Standard ein freies Zeitschlitzpaar mit einem "Downlink"-Zeitschlitz ZS_{DOWN} und einem "Uplink"-Zeitschlitz ZS_{UP} ausgewählt, bei dem der Abstand zwischen dem "Downlink"-Zeitschlitz ZS_{DOWN} und dem "Uplink"-Zeitschlitz ZS_{UP} ebenfalls gemäß dem DECT-Standard die halbe Länge (5 ms) des DECT-Übertragungszeitrahmens beträgt.

FDD-Telekommunikationsysteme (**F**requency **D**ivision **D**uplex) sind Telekommunikationssysteme, bei denen der Zeitrahmen, bestehend aus mehreren Zeitschlitzen, für die Abwärtsübertragungsrichtung (Downlink) in einem ersten Frequenzband und für die Aufwärtsübertragungsrichtung (Uplink) in einem zweiten Frequenzband übertragen wird.

Ein FDD-Telekommunikationssystem, das den Zeitrahmen auf diese Weise überträgt, ist z.B. das bekannte GSM-System [**G**roupe **S**péciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale europäische Mobilfunknetze", Seiten 137 bis 152* **in Verbindung mit** der Publikation *telekom praxis 4*/*1993, P.Smolka "GSM-Funkschnittstelle - Elemente und Funktionen", Seiten 17 bis 24*].

Die Luftschnittstelle für das GSM-System kennt eine Vielzahl von als Übertragungswegdienste (bearer services) bezeichneten logischen Kanälen, so z.B. einen AGCH-Kanal (**A**ccess **G**rant **CH**annel), einen BCCH-Kanal (**B**road**C**ast **CH**annel, einen FACCH-Kanal (Fast **A**ssociated **C**ontrol **CH**annel), einen PCH-Kanal (**P**aging **CH**hannel), einen RACH-Kanal (**R**andom **A**ccess **CH**annel) und einen TCH-Kanal (**T**raffic **CH**annel), deren jeweilige Funktion in der Luftschnittselle z.B. in der Druckschrift *Informatik Spektrum 14 (1991) Juni, Nr. 3, Berlin, DE; A.Mann: "Der GSM-Standard - Grundlage für digitale europäische Mobilfunknetze", Seiten 137 bis 152* **in Verbindung mit** der Publikation *telekom praxis 4*/*1993, P.Smolka* "*GSM-Funkschnittstelle - Elemente und Funktionen*", *Seiten 17 bis 24* beschrieben ist.

Da im Rahmen des UMTS-Szenario (3. Mobilfunkgeneration bzw. IMT-2000) der WCDMA/FDD-Betrieb und der TDCDMA/TDD-Betrieb gemeinsam zum Einsatz kommen sollen, ist ein effizienter Umgang mit den logischen Kanälen bzw. den Übertragungswegdiensten in der Luftschnittstelle für Telekommunikationssysteme mit drahtloser, auf Code- und Zeitmultiplex basierender Telekommunikation zwischen mobilen und/oder stationären Sende-/Empfangsgeräten wünschenswert.

Die der Erfindung zugrundeliegende Aufgabe besteht darin, für Telekommunikationssysteme mit drahtloser, auf Code- und Zeitmultiplex basierender Telekommunikation zwischen mobilen und/oder stationären Sende-/Empfangsgeräten die für die Nutzdatenübertragung zur Verfügung stehenden Kapazitäten bzw. Ressourcen im Hinblick auf eine verbesserte spektrale Effizienz und/oder eine verbesserte Performance optimal ausgenutzt werden.

Diese Aufgabe wird jeweils durch die Merkmale der Patentansprüche 1 und 4 gelöst.

Die der Erfindung zugrundeliegende Idee besteht darin, daß - gemäß den Ansprüchen 1 und 4 - bei für Telekommunikationssysteme mit drahtloser, auf Code- und Zeitmultiplex basierender Telekommunikation zwischen mobilen und/oder stationären Sende-/Empfangsgeräten, sowohl in dem TDD-Modus als auch in dem FDD-Modus in einem für mindestens eine vorgegebene Telekommunikationsverbindung belegten Zeitschlitzpaar eine durch die Codes aufgespannte Code-Ebene für über die jeweilige Telekommunikationsverbindung zu übertragende Dienste dynamisch zuteilbar ist.

Bei der Weiterbildung der Erfindung gemäß Anspruch 2 bzw. Anspruch 5 ist es vorteilhaft, daß ein effizienter Umgang mit den logischen Kanälen bzw. den Übertragungswegdiensten erreicht wird.

Bei der Weiterbildung der Erfindung gemäß Anspruch 3 bzw. Anspruch 6 ist es vorteilhaft, daß im TDD-Modus die Performance und die spektrale Effizienz des Telekommunikationssystems gegenüber bekannten TDD-Systemen zum Teil wesentlich verbessert ist.

Weitere vorteilhafte Weiterbildungen der Erfindung sind in den übrigen Patentansprüchen angegeben.

Ein Ausführungsbeispiel der Erfindung wird anhand der FIGUREN 8 bis 11 erläutert. Diese zeigen:
FIGUR 8 ein gegenüber den Zeitrahmen in den FIGUREN 1 bis 3 und dem DECT-Übertragungszeitrahmen in FIGUR 7 in bezug auf die Zeitschlitzanzahl (modifizierten) TDD-Zeitmultiplexrahmen,

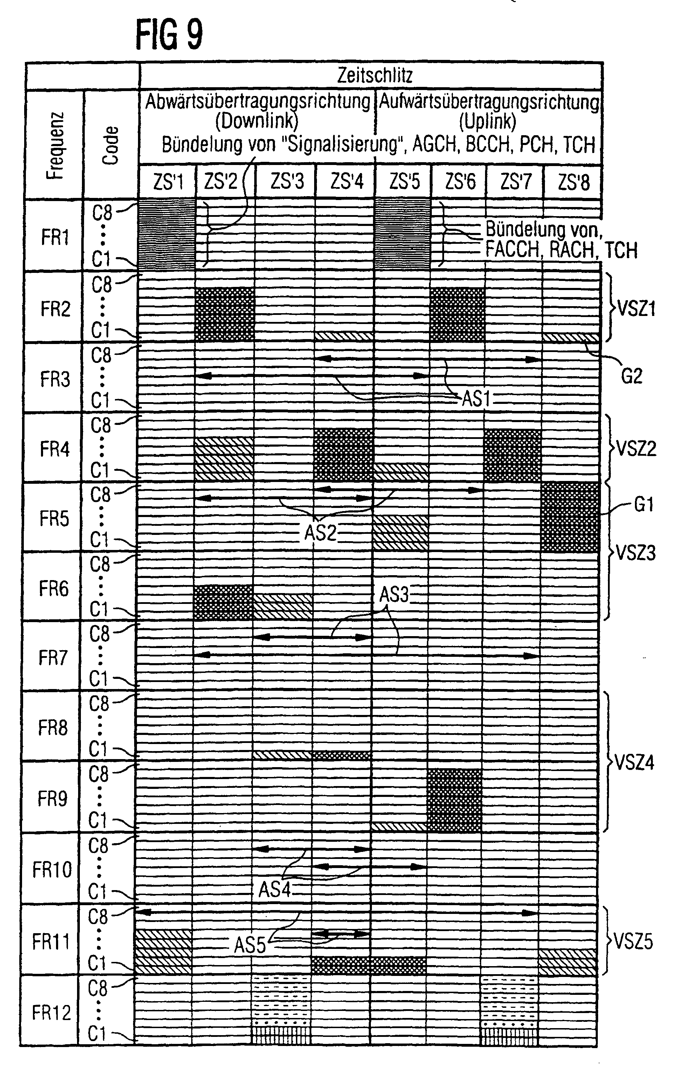

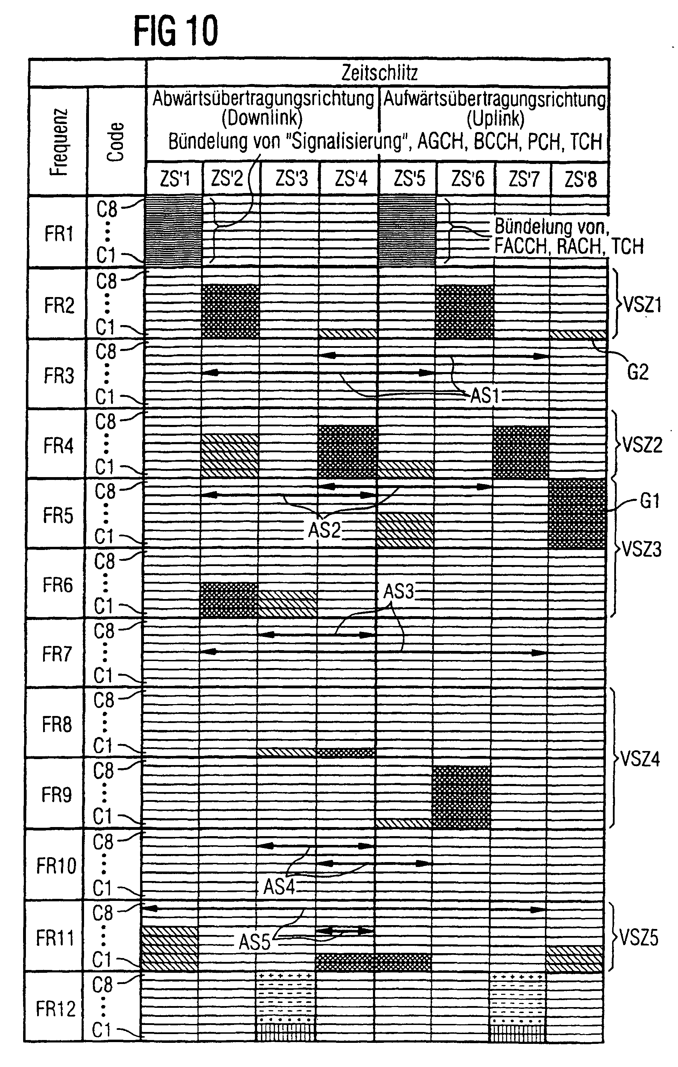

FIGUREN 9 und 10 auf der Basis des Zeitmultiplexrahmens nach FIGUR 8 eine Kanalzuweisungstabelle für Kanäle mit einer Frequenz-, Code- und Zeitmultiplexkomponente,

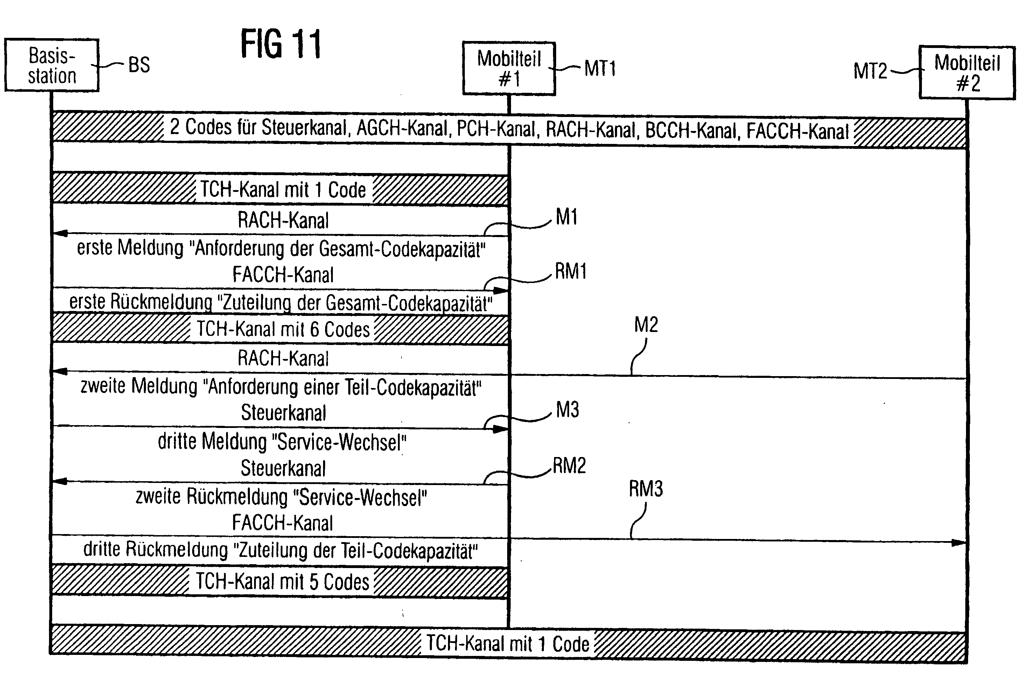

FIGUR 11 ein Meldungsflußdiagramm für das Szenario "Dynamische Ressourcen-Zuweisung (Dynamic Resource Allocation)".

FIGUR 8 zeigt ausgehend von den Zeitrahmen in den FIGUREN 1 bis 3 und dem DECT-Übertragungszeitrahmen in FIGUR 7 einen (modifizierten) TDD-Zeitmultiplexrahmen ZMR mit acht Zeitschlitzen ZS'1...ZS'8, wobei die ersten vier Zeitschlitze ZS'1...ZS'4 für die Abwärtsübertragungsrichtung DL und die zweiten vier Zeitschlitzen ZS'5...ZS'8 für die Aufwärtsübertragungsrichtung UL vorgesehen sind. Die Anzahl der Zeitschlitze ist von "16" gemäß den FIGUREN 1 und 3 auf "8" lediglich aus Darstellungsgründen für die Kanalzuweisungstabelle in FIGUR 9 verringert worden und hat keinen beschränkenden, limitierenden Einfluß auf die Erfindung. Im Gegenteil - die Anzahl der Zeitschlitze kann - wie die anderen physikalischen Ressourcen (z.B. Code, Frequenz, etc.) - vielmehr je nach Telekommunikationssystem mehr oder weniger beliebig variiert werden.

FIGUR 9 zeigt auf der Basis des Zeitmultiplexrahmens nach FIGUR 8 eine Kanalzuweisungstabelle für Kanäle mit einer Frequenz-, Code- und Zeitmultiplexkomponente. Die Zeitmultiplexkomponente dieser Tabelle umfaßt die Zeitschlitze ZS'1...ZS'8 mit der TDD-Einteilung gemäß FIGUR 8. Die Frequenzmultiplexkomponente umfaßt 12 Frequenzen FR1...FR12, während die Codemultiplexkomponente 8 Codes (Pseudo-Zufallssignale) C1...C8 enthält.

Auf einer zwölften Frequenz FR12 in einem dritten Zeitschlitz ZS'3 und einem siebten Zeitschlitz ZS'7 bestehen z.B. gemäß FIGUR 11 Telekommunikationsverbindungen zwischen einer als stationäres Sende-/Empfangsgerät ausgebildeten Basisstation BS und zwei jeweils als mobile Sende-/Empfangsgeräte ausgebildeten Mobilteilen, einem ersten Mobilteil MT1 und einem zweiten Mobilteil MT2.

Die Aufteilung der Codes C1...C8 erfolgt vorzugsweise nach dem nachfolgend beschriebenen, auf einer ersten Frequenz FR1 stattfindenden Szenarios. Alternativ zu diesem Szenario sind auch andere Aufteilungsszenarien möglich. So ist es z.B. möglich, daß sämtliche Codes C1...C8 einem einzigen über die Telekommunikationsverbindung, z.B. zwischen dem ersten Mobilteil MT1 und der Basisstation BS, zu übertragenden Dienst zugewiesen werden. In diesem Fall muß die zwischen der Basisstation BS und dem ersten Mobilteil MT1 und evt. anderen Mobilteilen notwendige Signalisierung auf einem anderen Zeitschlitzpaar stattfinden.

Auf der ersten Frequenz FR1 werden als "bearer services" ausgebildete Übertragungswegdienste, z.B. logische Kanäle des Telekommunikationssystems wie der Steuerkanal zur Signaiisierung, der AGCH-Kanal, der BCCH-Kanal, der PCH-Kanal, der RACH-Kanal, der TCH-Kanal und/oder der FACCH-Kanal, die in dem Telekommunikationssystem in Abwärtsrichtung und/oder Aufwärtsrichtung benötigt werden, in einer durch die Codes C1...C8 aufgespannten Code-Ebene gebündelt. Diese Bundelung erweist sich für die vorstehend genannten Telekommunikationssysteme als zweckmäßig, weil dadurch eine unnötige Belegung von Zeitschlitzen, also der Ressource "Zeit" vermieden wird.

Die FIGUR 9 zeigt eine bevorzugte Ausführungsform, gemäß der auf der ersten Frequenz FR1 in der Abwärtsübertragungsrichtung in einem ersten Zeitschlitz ZS'1 als ein fest vorgegebener (vereinbarter) erster Auswahlzeitschlitz und in der Aufwärtsübertragungsrichtung in einem fünften Zeitschlitz ZS'5 als ein fest vorgegebener (vereinbarter) zweiter Auswahlzeitschlitz vorzugsweise jeweils sämtliche Codes C1...C8 für die Bündelung der genannten Übertragungswegdienste herangezogen werden. Es ist natürlich auch möglich weniger oder, wenn mehr als diese acht Codes zur Verfügung stehen, auch mehr Codes zu benutzen.

Bei dieser in der FIGUR 9 dargestellten Bündelung sind z.B. die Codes C1...C8 in dem ersten Zeitschlitz ZS'1 so aufgeteilt, daß ein Code für den Steuerkanal zur Signalisierung und den AGCH-Kanal, ein weiterer Code für den BCCH-Kanal und den PCH-Kanal sowie die verbleibenden sechs Codes für den TCH-Kanal reserviert bzw. vergeben werden, während die Codes C1...C8 in dem fünften Zeitschlitz ZS'5 so aufgeteilt sind, daß ein Code für den RACH-Kanal, ein weiterer Code für den FACCH-Kanal zur Handover-Indikation und die verbleibenden sechs Codes wiederum für den TCH-Kanal reserviert bzw. vergeben werden.

In bezug auf diese Ausführungen werden auf der Frequenz FR12 in dem dritten Zeitschlitz ZS'3 und dem siebten Zeitschlitz ZS'7 gemäß der FIGUR 11 für die Telekommunikationsverbindungen zwischen der Basisstation BS und den beiden Mobilteilen MT1, MT2 z.B. ein erster Code C1 und ein zweiter Code C2 (mit "|" markierter Bereich) dem Steuerkanal zur Signalisierung, dem AGCH-Kanal, dem BCCH-Kanal, dem PCH-Kanal, dem RACH-Kanal und dem FACCH-Kanal zur Handover-Indikation zugewiesen, während die übrigen sechs Codes, ein dritter Code C3, ein vierter Code C4, ein fünfter Code C5, ein sechster Code C6, ein siebter Code C7 und ein achter Code C8, dem TCH-Kanal zugewiesen werden.

Nach der FIGUR 9 iVm der FIGUR 11 wird der dritte Code C3 (mit "·" markierter Bereich) in den Zeitschlitzen ZS'3, ZS'7 dem TCH-Kanal zur Übertragung von Nutzdaten zwischen der Basisstation BS und dem ersten Mobilteil MT1 zugeteilt.

Nach der FIGUR 11 fordert das erste Mobilteil MT1 die Gesamt-Codekapazität bei der Basisstation BS an , indem es eine erste Meldung "Anforderung der Gesamt-Codekapazität" M1 auf dem RACH-Kanal an die Basisstation BS sendet. Empfängt das erste Mobilteil MT1 von der Basisstation BS auf diese erste Meldung M1 eine auf dem FACCH-Kanal gesendete erste Rückmeldung "Zuteilung der Gesamt-Codekapazität" RM1, so kann es die Gesamt-Codekapazität im folgenden nutzen. Dies bedeutet gemäß der FIGUR 9, daß dem ersten Mobilteil MT1 zusätzlich zu dem dritten Code C3 auch noch die Codes C4...C8 (mit "-" markierter Bereich) in den Zeitschlitzen ZS'3, ZS'7 zur Verfügung stehen. Der TCH-Kanal zur Übertragung von Nutzdaten zwischen der Basisstation BS und dem ersten Mobilteil MT1 erstreckt sich somit über sechs Codes. Dadurch können z.B. höherratige Dienste (z.B. Paketdatenübertragung; Stichwort: Internet Session) zwischen der Basisstation BS und dem ersten Mobilteil MT1 übertragen werden.

Alternativ ist es auch möglich, daß die Codes C4...C8 dem ersten Mobilteil MT1 nur in dem Zeitschlitz ZS'7 zur Verfügung stehen. In diesem Fall kann nur das erste Mobilteil MT1 z.B. höherratige Dienste zur Basisstation BS übertragen.

Wenn die Basisstation BS in diesem Zustand gemäß der FIGUR 11 von dem zweiten Mobilteil MT2 eine zweite Meldung "Anforderung einer Teil-Codekapazität" M2 auf dem RACH-Kanal empfängt, mit der das zweite Mobilteil MT2 bei der Basisstation BS eine Teil-Codekapazität, z.B. einen Code zur Sprachübertragung, anfordert, dann überträgt die Basisstation BS auf dem Steuerkanal eine dritte Meldung "Service-Wechsel" M3 andas erste Mobilteil MT1. Das erste Mobilteil MT1 sendet daraufhin als Antwort auf die dritte Meldung M3 eine zweite Rückmeldung "Service-Wechsel" RM2, womit der Service-Wechsel bestätigt wird. Die Basisstation BS überträgt daraufhin auf dem FACCH-Kanal als Antwort auf die zweite Meldung M2 des zweiten Mobilteils MT2 eine dritte Rückmeldung "Zuteilung der Teil-Codekapazität" RM2 an das zweite Mobilteil MT2.

Mit dem Empfang dieser dritten Rückmeldung RM3 wird einerseits zwischen der Basisstation BS und dem zweiten Mobilteil MT2 der TCH-Kanal mit der angeforderten Codekapazität, z.B. der TCH-Kanal mit einem Code, aufgebaut und andererseits die Codekapazität des TCH-Kanals zwischen der Basisstation BS und dem ersten Mobilteil MT1 entsprechend, z.B. auf fünf, Codes verringert.

Dieser Endzustand ist ausgehend von der FIGUR 9 in FIGUR 10 dargestellt, wo der Code C8 (mit "+" markierter Bereich) dem zweiten Mobilteil MT2 zugeteilt ist.

Die spektrale Effizienz und/oder die Performance des Telekommunikationssystems kann darüber hinaus noch weiter verbessert werden, wenn- wie in der FIGUR 9 dargestellt ist - für verschiedene Verbindungsszenarien, einem ersten Verbindungsszenario VSZ1, einem zweiten Verbindungsszenario VSZ2, einem dritten Verbindungsszenario VSZ3, einem vierten Verbindungsszenario VSZ4 und einem fünften Verbindungsszenario VSZ5, jeweils mehrere bidirektionale TDD-Telekommunikationsverbindungen, für die jeweils die physikalische Ressource "Code, Frequenz, Zeit" in Ab- und Aufwärtsübertragungsrichtung teilweise gleich und teilweise ungleich belegt sind. Zu jedem Verbindungsszenario VSZ1...VSZ5 gehört z.B. eine erste Gruppe von Telekommunikationsverbindungen G1, die mit einer aufsteigenden und abfallenden Schraffur markiert ist, und eine zweite Gruppe von Telekommunikationsverbindungen G2, die mit einer abfallenden Schraffur markiert ist. Jede Gruppe enthält dabei mindestens eine bidirektionale Telekommunikationsverbindung.

In dem ersten Verbindungsszenario VSZ1 belegt die erste Gruppe von Telekommunikationsverbindungen G1 auf einer zweiten Frequenz FR2 in Abwärtsübertragungsrichtung in einem zweiten Zeitschlitz ZS'2 sechs Codes - den ersten Code C1, den zweiten Code C2, den dritten Code C3, den vierten Code C4, den fünften Code C5 und den sechsten Code C6 - und in Aufwärtsübertragungsrichtung in einem sechsten Zeitschlitz ZS'6 wieder die sechs Codes C1...C6, während die zweite Gruppe von Telekommunikationsverbindungen G2 auf der zweiten Frequenz FR2 in Abwärtsübertragungsrichtung in einem vierten Zeitschlitz ZS'4 den ersten Code C1 und in Aufwärtsübertragungsrichtung in einem achten Zeitschlitz ZS'8 wieder den ersten Code C1 belegt.

Der vierte Zeitschlitz ZS'4 und der zweite Zeitschlitz ZS'2 sind "Downlink"-Zeitschlitze ZS_{DOWN}, während der sechste Zeitschlitz ZS'6 und der achte Zeitschlitz ZS'8 "Uplink"-Zeitschlitze ZS_{UP} sind.

Für jede Telekommunikationsverbindung in den Gruppen G1, G2 ist ein erster Abstand AS1 zwischen dem "Downlink"-Zeitschlitz ZS_{DOWN} und dem "Uplink"-Zeitschlitz ZS_{UP} - gemäß dem Stand der Technik (vgl. FIGUR 7) - so lang, wie der halbe Zeitmultiplexrahmen ZMR. Der Abstand AS1 ist somit ein Bruchteil der Länge des Zeitmultiplexrahmens ZMR, wobei der Bruchteil den Wert 0,5 hat.

In dem zweiten Verbindungsszenario VSZ2 belegt die erste Gruppe von Telekommunikationsverbindungen G1 auf einer vierten Frequenz FR4 in Abwärtsübertragungsrichtung in dem vierten Zeitschlitz ZS'4 die sechs Codes C1...C6 und in Aufwärtsübertragungsrichtung in dem siebten Zeitschlitz ZS'7 wieder die sechs Codes C1...C6, während die zweite Gruppe von Telekommunikationsverbindungen G2 auf der vierten Frequenz FR4 in Abwärtsübertragungsrichtung in einem zweiten Zeitschlitz ZS'2 die Codes C1...C4 und in Aufwärtsübertragungsrichtung in dem fünften Zeitschlitz ZS'5 den ersten Code C1 und den zweiten Code C2 belegt.

Der vierte Zeitschlitz ZS'4 und der zweite Zeitschlitz ZS'2 sind - wie beim ersten Verbindungsszenario VSZ1 - "Downlink"-Zeitschlitze ZS_{DOWN}, während der siebte Zeitschlitz ZS'7 und der fünfte Zeitschlitz ZS'5 "Uplink"-Zeitschlitze ZS_{UP} sind.

Für jede Telekommunikationsverbindung in den Gruppen G1, G2 ist ein zweiter Abstand AS2 zwischen dem "Downlink"-Zeitschlitz ZS_{DOWN} und dem "Uplink"-Zeitschlitz ZS_{UP} so lang, wie ein Bruchteil (fractional distance) der Länge des Zeitmultiplexrahmens ZMR, wobei der Bruchteil so bemessen und größer oder kleiner als der Wert 0,5 ist, daß der zweite Abstand AS2 fest ist.

In dem dritten Verbindungsszenario VSZ3 belegt die erste Gruppe von Telekommunikationsverbindungen G1 in Abwärtsübertragungsrichtung auf einer sechsten Frequenz FR6 in dem zweiten Zeitschlitz ZS'2 die vier Codes C1...C4 und in Aufwärtsübertragungsrichtung auf einer fünften Frequenz FR5 in dem achten Zeitschlitz ZS'8 die sechs Codes C1...C6 sowie den siebten Code C7 und den achten Code C8, während die zweite Gruppe von Telekommunikationsverbindungen G2 in Abwärtsübertragungsrichtung auf der sechsten Frequenz FR6 in dem dritten Zeitschlitz ZS'3 die Codes C1...C3 und in Aufwärtsübertragungsrichtung auf der fünften Frequenz FR5 in dem fünften Zeitschlitz ZS'5 die Codes C1...C4 belegt.

Der zweite Zeitschlitz ZS'2 und der dritte Zeitschlitz ZS'3 sind "Downlink"-Zeitschlitze ZS_{DOWN}, während der achte Zeitschlitz ZS'8 und der fünfte Zeitschlitz ZS'5 "Uplink"-Zeitschlitze ZS_{UP} sind.

Für jede Telekommunikationsverbindung in den Gruppen G1, G2 beträgt ein dritter Abstand AS3 zwischen dem "Downlink"-Zeitschlitz ZS_{DOWN} und dem "Uplink"-Zeitschlitz ZS_{UP} ein Bruchteil (fractional distance) der Länge des Zeitmultiplexrahmens ZMR, wobei der Bruchteil jeweils so bemessen ist, daß der dritte Abstand AS3 variabel ist.

In dem vierten Verbindungsszenario VSZ4 belegt die erste Gruppe von Telekommunikationsverbindungen G1 in Abwärtsübertragungsrichtung auf einer achten Frequenz FR8 in dem viertten Zeitschlitz ZS'4 den ersten Code C1 und in Aufwärtsübertragungsrichtung auf einer neunten Frequenz FR9 in dem sechsten Zeitschlitz ZS'6 die sieben Codes C1...C7, während die zweite Gruppe von Telekommunikationsverbindungen G2 in Abwärtsübertragungsrichtung auf der achten Frequenz FR8 in dem dritten Zeitschlitz ZS'3 den ersten Code C1 und in Aufwärtsübertragungsrichtung auf der neunten Frequenz FR9 in dem fünften Zeitschlitz ZS'5 den ersten Code C1 belegt.

Der vierte Zeitschlitz ZS'4 und der dritte Zeitschlitz ZS'3 sind "Downlink"-Zeitschlitze ZS_{DOWN}, während der sechste Zeitschlitz ZS'6 und der fünfte Zeitschlitz ZS'5 "Uplink"-Zeitschlitze ZS_{UP} sind.

Für jede Telekommunikationsverbindung in den Gruppen G1, G2 beträgt ein vierter Abstand AS4 zwischen dem "Downlink"-Zeitschlitz ZS_{DOWN} und dem "Uplink"-Zeitschlitz ZS_{UP} ein Bruchteil (fractional distance) der Länge des Zeitmultiplexrahmens ZMR, wobei der Bruchteil jeweils so bemessen ist, daß der vierte Abstand AS4 fest ist.

In dem fünften Verbindungsszenario VSZ5 belegt die erste Gruppe von Telekommunikationsverbindungen G1 auf einer elften Frequenz FR11 in Abwärtsübertragungsrichtung in dem vierten Zeitschlitz ZS'4 den ersten Code C1 und den zweiten Code C2 und in Aufwärtsübertragungsrichtung in dem fünften Zeitschlitz ZS'5 wieder den ersten Code C1 und den zweiten Code C2, während die zweite Gruppe von Telekommunikationsverbindungen G2 auf der elften Frequenz FR11 in Abwärtsübertragungsrichtung in dem ersten Zeitschlitz ZS'1 die Codes C1...C5 und in Aufwärtsübertragungsrichtung in dem achten Zeitschlitz ZS'8 die Codes C1...C3 belegt.

Der vierte Zeitschlitz ZS'4 und der erste Zeitschlitz ZS'1 sind "Downlink"-Zeitschlitze ZS_{DOWN}, während der fünfte Zeitschlitz ZS'5 und der achte Zeitschlitz ZS'8 "Uplink"-Zeitschlitze ZS_{UP} sind.

Für jede Telekommunikationsverbindung in den Gruppen G1, G2 ist ein fünfter Abstand AS5 zwischen dem "Downlink"-Zeitschlitz ZS_{DOWN} und dem "Uplink"-Zeitschlitz ZS_{UP} so lang, wie ein Bruchteil (fractional distance) der Länge des Zeitmultiplexrahmens ZMR, wobei der Bruchteil so bemessen ist, daß der fünfte Abstand AS5 variabel ist.

## Patentansprüche

1. Luftschnittstelle für Telekommunikationssysteme mit drahtloser, auf Code- und Zeitmultiplex basierender Telekommunikation zwischen mobilen und/oder stationären Sende-/Empfangsgeräten mit folgenden Merkmalen:
(a) für das Telekommunikationssystem vorgegebene Trägerfrequenzen (FR1...FR12) sind jeweils in einer Anzahl von Zeitschlitzen (ZS'1...ZS'8) mit jeweils einer vorgegebenen Zeitschlitzdauer (T_{ZS}) derart unterteilt, daß das Telekommunikationssystem im TDD-Modus oder FDD-Modus betreibbar ist, wobei die Zeitschlitze (ZS'1...ZS'8) pro Trägerfrequenz (FR1...FR12) jeweils einen Zeitmultiplexrahmen (ZMR) bilden,
(b) in den Zeitschlitzen (ZS'1...ZS'8) bzw. den Frequenzbereichen des Telekommunikationssystems sind höchstens eine vorgegebene Anzahl von bidirektionalen Telekommunikationsverbindungen in Auf- und Abwärtsrichtung zwischen Telekommunikationsteilnehmern der mobilen Sende-/Empfangsgeräten (MS1...MS5) und/oder stationären Sende-/Empfangsgeräten (BTS1, BTS2) des Telekommunikationssystems gleichzeitig herstellbar, wobei dabei übertragene Teilnehmersignale zur Separierbarkeit mit den Teilnehmern individuell zugeordneten Pseudo-Zufallssignalen (C1...C8), den sogenannten Codes, verknüpft sind,
(c) in einem für mehrere vorgegebene Telekommunikationsverbindungen belegten Zeitschlitzpaar ist eine durch die Codes (C1...C8) aufgespannte Code-Ebene für über die jeweilige Telekommunikationsverbindung zu übertragende Dienste dynamisch zuteilbar.

2. Luftschnittstelle nach Anspruch 1, **dadurch gekennzeichnet, daß**
in der Code-Ebene des Zeitschlitzpaares als Übertragungswegdienste zumindest ein Teil von logischen Kanälen des Telekommunikationssystems, insbesondere der Steuerkanal zur Signalisierung, der AGCH-Kanal, der BCCH-Kanal, der PCH-Kanal, der RACH-Kanal, der TCH-Kanal und/oder der FACCH-Kanal, gebündelt ist, so daß nicht mehr alle Codes in dem Zeitschlitzpaar für den jeweils zu übertragenden Dienst zuteilbar sind.

3. Luftschnittstelle nach einem der Ansprüche 1 bis 2, **dadurch gekennzeichnet, daß**
in dem TDD-Modus für das Zeitschlitzpaar ein "Downlink"-Zeitschlitz (ZS'_{DOWN}) und ein "Uplink"-Zeitschlitz (ZS'_{UP}) derart auswählbar sind, daß der Abstand (AS2...AS5) zwischen dem "Downlink"-Zeitschlitz (ZS'_{DOWN}) und dem "Uplink"-Zeitschlitz (ZS'_{UP}), die derselben Trägerfrequenz (FR1...FR12) oder unterschiedlichen Trägerfrequenzen (FR1...FR12) zugewiesen sind, ein Bruchteil der Länge des Zeitmultiplexrahmens (ZMR) ist, wobei der Abstand (AS2...AS5) fest oder variabel ist.

4. Verfahren zum Steuern von Telekommunikationsverbindungen in Telekommunikationssysteme mit drahtloser, auf Code- und Zeitmultiplex basierender Telekommunikation zwischen mobilen und/oder stationären Sende-/Empfangsgeräten, wobei
(a) für das Telekommunikationssystem vorgegebene Trägerfrequenzen (FR1...FR12) jeweils in einer Anzahl von Zeitschlitzen (ZS'1...ZS'8) mit jeweils einer vorgegebenen Zeitschlitzdauer (T_{ZS}) derart unterteilt sind, daß das Telekommunikationssystem im TDD-Modus oder FDD-Modus betreibbar ist, wobei die Zeitschlitze (ZS'1...ZS'8) pro Trägerfrequenz (FR1...FR12) jeweils einen Zeitmultiplexrahmen (ZMR) bilden,
(b) in den Zeitschlitzen (ZS'1...ZS'8) bzw. den Frequenzbereichen des Telekommunikationssystems höchstens eine vorgegebene Anzahl von bidirektionalen Telekommunikationsverbindungen in Auf- und Abwärtsrichtung zwischen Telekommunikationsteilnehmern der mobilen Sende-/Empfangsgeräten (MS1...MS5) und/oder stationären Sende-/Empfangsgeräten (BTS1, BTS2) des Telekommunikationssystems gleichzeitig herstellbar sind, wobei dabei übertragene Teilnehmersignale zur Separierbarkeit mit den Teilnehmern individuell zugeordneten Pseudo-Zufallssignalen (C1...C8), den sogenannten Codes, verknüpft sind,
**dadurch gekennzeichnet, daß**
in einem für mehrere vorgegebene Telekommunikationsverbindungen belegten Zeitschlitzpaar eine durch die Codes (C1...C8) aufgespannte Code-Ebene für über die jeweilige Telekommunikationsverbindung zu übertragende Dienste dynamisch zugeteilt wird.

5. Verfahren nach Anspruch 4, **dadurch gekennzeichnet, daß**
in der Code-Ebene des Zeitschlitzpaares als Übertragungswegdienste zumindest ein Teil von logischen Kanälen des Telekommunikationssystems, insbesondere der Steuerkanal zur Signalisierung, der AGCH-Kanal, der BCCH-Kanal, der PCH-Kanal, der RACH-Kanal, der TCH-Kanal und/oder der FACCH-Kanal, gebündelt wird, so daß nicht mehr alle Codes in dem Zeitschlitzpaar für den jeweils zu übertragenden Dienst zuteilbar sind.

6. Verfahren nach Anspruch 4 oder 5, **dadurch gekennzeichnet, daß**
in dem TDD-Modus für das Zeitschlitzpaar ein "Downlink"-Zeitschlitz (ZS'_{DOWN}) und ein "Uplink"-Zeitschlitz (ZS'_{UP}) derart ausgewählt werden, daß der Abstand (AS2...AS5) zwischen dem "Downlink"-Zeitschlitz (ZS'_{DOWN}) und dem "Uplink"-Zeitschlitz (ZS'_{UP}), die derselben Trägerfrequenz (FR1...FR12) oder unterschiedlichen Trägerfrequenzen (FR1...FR12) zugewiesen sind, ein Bruchteil der Länge des Zeitmultiplexrahmens (ZMR) ist, wobei der Abstand (AS2...AS5) fest oder variabel ist.

## Claims

1. Air interface for telecommunications systems using wire-free telecommunication, based on code-division multiplexing and time-division multiplexing, between mobile and/or stationary transmitting/receiving appliances, having the following features:
(a) carrier frequencies (FR1...FR12) which are predetermined for the telecommunications system are in each case subdivided into a number of timeslots (ZS'1...ZS'8) which each have a predetermined time slot duration (T_{ZS}) in such a way that the telecommunications system can be operated in the TDD mode or FDD mode, with the time slots (ZS'1...ZS'8) for each carrier frequency (FR1...FR12) in each case forming a time-division multiplex frame (ZMR),
(b) at most a predetermined number of bidirectional telecommunications links can be set up at the same time in the uplink direction and downlink direction between telecommunications subscribers of the mobile transmitting/receiving appliances (MS1...MS5) and/or stationary transmitting /receiving appliances (BTS1, BTS2) in the telecommunications system in the time slots (ZS'1...ZS'8) or frequency bands of the telecommunications system, with subscriber signals which are transmitted in this case being linked for separability to pseudo-random signals (C1...C8), the so-called codes, which are associated individually with the subscribers,
(c) a code level which is covered by the codes (C1...C8) for services which are to be transmitted via the respective telecommunications link can be allocated dynamically in a time slot pair which is occupied by two or more predetermined telecommunications links.

2. Air interface according to Claim 1, **characterized in that**,
in the code level of the time slot pair, at least some of the logical channels of the telecommunications system, in particular the control channel for signalling, the AGCH channel, the BCCH channel, the PCH channel, the RACH channel, the TCH channel and/or the FACCH channel, are bundled as transmission path services, so that it is no longer possible to allocate all the codes in the time slot pair for the respective service to be transmitted.

3. Air interface according to one of Claims 1 or 2, **characterized in that**,
for the pair of time slots, a downlink time slot (ZS'_{DOWN}) and an uplink time slot (ZS'_{UP}) can be chosen for each telecommunications link in the TDD mode, in such a way that the separation (AS2...AS5) between the downlink time slot (ZS'_{DOWN}) and the uplink time slot (ZS'_{UP}), which are assigned to the same carrier frequency (FR1...FR12) or different carrier frequencies (FR1...FR12), is a fraction of the length of the time-division multiplex frame (ZMR), the separation (AS2...AS5) being fixed or variable.

4. Method for controlling telecommunications links in telecommunications systems with wire-free telecommunication, based on code-division multiplexing and time-division multiplexing, between mobile and/or stationary transmitting/receiving appliances, in which case:
(a) carrier frequencies (FR1...FR12) which are predetermined for the telecommunications system are in each case subdivided into a number of time slots (ZS'1...ZS'8) which each have a predetermined time slot duration (T_{ZS}) in such a way that the telecommunications system can be operated in the TDD mode or FDD mode, with the time slots (ZS'1...ZS'8) for each carrier frequency (FR1...FR12) in each case forming a time-division multiplex frame (ZMR),
(b) at most a predetermined number of bidirectional telecommunications links can be set up at the same time in the uplink direction and downlink direction between telecommunications subscribers of the mobile transmitting/receiving appliances (MS1...MS5) and/or stationary transmitting /receiving appliances (BTS1, BTS2) in the telecommunications system in the time slots (ZS'1...ZS'8) or frequency bands of the telecommunications system, with subscriber signals which are transmitted in this case being linked for separability to pseudorandom signals (C1...C8), the so-called codes, which are associated individually with the subscribers,
**characterized in that**
a code level which is covered by the codes (C1...C8) for services which are to be transmitted via the respective telecommunications link is allocated dynamically in a time slot pair which is occupied by two or more predetermined telecommunications links.

5. Method according to Claim 4, **characterized in that**, in the code level of the time slot pair, at least some of the logical channels of the telecommunications system, in particular the control channel for signalling, the AGCH channel, the BCCH channel, the PCH channel, the RACH channel, the TCH channel and/or the FACH channel, are bundled as transmission path services, so that it is no longer possible to allocate all the codes in the time slot pair for the respective service to be transmitted.

6. Method according to Claim 4 or 5, **characterized in that**,
for the pair of time slots, a downlink time slot (ZS'_{DOWN}) and an uplink time slot (ZS'_{UP}) are chosen for each telecommunications link in the TDD mode, in such a way that the separation (AS2...AS5) between the . downlink time slot (ZS'_{DOWN}) and the uplink time slot (ZS'_{UP}), which are assigned to the same carrier frequency (FR1...FR12) or different carrier frequencies (FR1...FR12), is a fraction of the length of the time-division multiplex frame (ZMR), the separation (AS2...AS5) being fixed or variable.

## Revendications

1. Interface radio pour systèmes de télécommunication à télécommunication sans fil fondée sur le code et le multiplexage dans le temps entre des émetteurs/récepteurs mobiles et/ou fixes, présentant les caractéristiques suivantes :
(a) des fréquences porteuses (FR1...FR12) prédéfinies pour le système de télécommunication sont divisées à chaque fois en un nombre d'intervalles de temps (ZS'1...ZS'8) ayant chacun une durée d'intervalle de temps (T_{SZ}) prédéfinie, de manière à ce que le système de télécommunication puisse fonctionner en mode TDD ou en mode FDD, les intervalles de temps (ZS'1...ZS'8) formant pour chaque fréquence porteuse (FR1...FR12) une trame de multiplexage temporel (ZMR) respective,
(b) il est possible d'établir simultanément, dans les intervalles de temps (ZS'1...ZS'8) resp. les gammes de fréquences du système de télécommunication, un nombre prédéfini maximum de liaisons de télécommunication bidirectionnelles dans le sens ascendant et descendant entre des abonnés des télécommunications des émetteurs/récepteurs mobiles (MS1...MS5) et/ou des émetteurs/récepteurs fixes (BTS1, BTS2) du système de télécommunication, les signaux d'abonnés transmis lors de ces liaisons étant liés, en vue de leur séparabilité, à des signaux pseudo-aléatoires (C1...C8), qu'on appelle des codes, attribués aux abonnés sur une base individuelle,
(c) un niveau des codes couvert par les codes (C1...C8) peut faire l'objet, dans une paire d'intervalles de temps réservée pour plusieurs liaisons de télécommunication prédéfinies, d'une allocation dynamique pour les services devant être transmis par le biais de la liaison de télécommunication respective.

2. Interface radio selon la revendication 1, **caractérisée en ce qu'**une partie au moins des canaux logiques du système de télécommunication, notamment le canal de commande servant à la signalisation, le canal AGCH, le canal BCCH, le canal PCH, le canal RACH, le canal TCH et/ou le canal FACCH sont concentrés, en tant que services de voie de transmission, dans le niveau des codes de la paire d'intervalles de temps, de manière à ce que les codes dans la paire d'intervalles de temps ne puissent plus être tous alloués au service respectif à transmettre.

3. Interface radio selon l'une des revendications 1 à 2, **caractérisée en ce que**, en mode TDD, on peut sélectionner pour la paire d'intervalles de temps un intervalle de temps "Downlink" (ZS'_{DOWN}) et un intervalle de temps "Uplink" (ZS'_{UP}) de manière à ce que la distance (AS2...AS5) entre l'intervalle de temps "Downlink" (ZS'_{DOWN}) et l'intervalle de temps "Uplink" (ZS'_{UP}), qui sont affectés à la même fréquence porteuse (FR1...FR12) ou à des fréquences porteuses différentes (FR1...FR12), soit une fraction de la longueur de la trame de multiplexage temporel (ZMR), la distance (AS2...AS5) étant fixe ou variable.

4. Procédé de commande des liaisons de télécommunication dans des systèmes de télécommunication à télécommunication sans fil fondée sur le code et le multiplexage dans le temps entre des émetteurs/récepteurs mobiles et/ou fixes,
(a) des fréquences porteuses (FR1...FR12) prédéfinies pour le système de télécommunication étant divisées à chaque fois en un nombre d'intervalles de temps (ZS'1...ZS'8) ayant chacun une durée d'intervalle de temps (T_{SZ}) prédéfinie, de manière à ce que le système de télécommunication puisse fonctionner en mode TDD ou en mode FDD, les intervalles de temps (ZS'1...ZS'8) formant pour chaque fréquence porteuse (FR1...FR12) une trame de multiplexage temporel (ZMR) respective,
(b) un nombre prédéfini maximum de liaisons de télécommunication bidirectionnelles pouvant être établi simultanément dans les intervalles de temps (ZS'1...ZS'8) resp. les gammes de fréquences du système de télécommunication dans le sens ascendant et descendant entre des abonnés des télécommunications des émetteurs/récepteurs mobiles (MS1...MS5) et/ou des émetteurs/récepteurs fixes (BTS1, BTS2) du système de télécommunication, les signaux d'abonnés transmis lors de ces liaisons étant liés, en vue de leur séparabilité, à des signaux pseudo-aléatoires (C1...C8), qu'on appelle des codes, attribués aux abonnés sur une base individuelle,
**caractérisé en ce qu'**un niveau des codes couvert par les codes (C1...C8) fait l'objet, dans une paire d'intervalles de temps réservée pour plusieurs liaisons de télécommunication prédéfinies, d'une allocation dynamique pour les services devant être transmis par le biais de la liaison de télécommunication respective.

5. Procédé selon la revendication 4, **caractérisé en ce qu'**une partie au moins des canaux logiques du système de télécommunication, notamment le canal de commande servant à la signalisation, le canal AGCH, le canal BCCH, le canal PCH, le canal RACH, le canal TCH et/ou le canal FACCH sont concentrés, en tant que services de voie de transmission, dans le niveau des codes de la paire d'intervalles de temps, de manière à ce que les codes dans la paire d'intervalles de temps ne puissent plus être tous alloués au service respectif à transmettre.

6. Procédé selon la revendication 4 ou 5, **caractérisé en ce que**, en mode TDD, on peut sélectionner pour la paire d'intervalles de temps un intervalle de temps "Downlink" (ZS'_{DOWN}) et un intervalle de temps "Uplink" (ZS'_{UP}) de manière à ce que la distance (AS2...AS5) entre l'intervalle de temps "Downlink" (ZS'_{DOWN}) et l'intervalle de temps "Uplink" (ZS'_{UP}), qui sont affectés à la même fréquence porteuse (FR1...FR12) ou à des fréquences porteuses différentes (FR1...FR12), soit une fraction de la longueur de la trame de multiplexage temporel (ZMR), la distance (AS2...AS5) étant fixe ou variable.
